(19) **Europäisches Patentamt**
**European Patent Office**
**Office européen des brevets**

(11) **EP 4 783 493 A2**

(12) **EUROPEAN PATENT APPLICATION**
published in accordance with Art. 153(4) EPC

(43) Date of publication:
**29.07.2026 Bulletin 2026/31**

(21) Application number: **23956212.7**

(22) Date of filing: **27.10.2023**

(51) International Patent Classification (IPC):
**H04L 1/00** (2006.01)

(52) Cooperative Patent Classification (CPC):
**H04L 1/00**

(86) International application number:
**PCT/KR2023/016932**

(87) International publication number:
**WO 2025/084490 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2023 KR 20230141571**

(71) Applicant: **Samsung Electronics Co., Ltd.
Suwon-si, Gyeonggi-do 16677 (KR)**

(72) Inventors:
• **LEE, Donghun**
  **Suwon-si Gyeonggi-do 16677 (KR)**
• **KANG, Jaeeun**
  **Suwon-si Gyeonggi-do 16677 (KR)**
• **MYUNG, Seho**
  **Suwon-si Gyeonggi-do 16677 (KR)**
• **LEE, Juho**
  **Suwon-si Gyeonggi-do 16677 (KR)**
• **JANG, Min**
  **Suwon-si Gyeonggi-do 16677 (KR)**
• **JUNG, Jungsoo**
  **Suwon-si Gyeonggi-do 16677 (KR)**
• **HAN, Donghwa**
  **Suwon-si Gyeonggi-do 16677 (KR)**

(74) Representative: **Nederlandsch Octrooibureau
P.O. Box 29720
2502 LS The Hague (NL)**

(54) **METHOD AND DEVICE FOR ADAPTIVELY CONTROLLING CODE RATE FOR STAIRCASE CODE IN WIRELESS COMMUNICATION SYSTEM**

(57) The present disclosure relates to a method and a device for adaptively controlling a code rate for a staircase code in a wireless communication system. A method for encoding a staircase code according to an embodiment of the present disclosure, the method being performed by a transmission device in a wireless communication system, comprises the processes of: adjusting a code rate of at least one layer, among all layers of the staircase code, to be relatively lower than code rates of the remaining layers excluding the at least one layer, and adjusting the code rates of the remaining layers to constantly maintain the overall code rate of the staircase code; alternately performing row-wise encoding or column-wise encoding using an element code according to a code rate adjusted for each layer of the staircase code; and transmitting, to a reception device, a staircase code word generated by performing the row-wise encoding or the column-wise encoding.

$\cdot M + \alpha_i + r_i = N_i$

Information part ($K_i$ bits) — Parity part ($r_i$ bits)

M columns — $\alpha_i$ columns — $r_i$ columns

FIG. 6

EP 4 783 493 A2

**Description**

[Technical Field]

The disclosure relates to a communication method and device using a staircase code in a wireless communication system.

[Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100$\mu$sec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

A staircase code is being studied as one of encoding schemes that may be used in next-generation communication systems such as a 5G communication system or a 6G communication system. The staircase code was first proposed in the optical communication field in 2012, and was introduced as a code that may guarantee excellent performance at a very high code rate using a Bose-Chaudhuri-Hocquenghem (BCH) code as a component code. The staircase code is known as a code having very excellent performance, especially when based on hard decision decoding (HDD), illustrating only a 0.56 dB difference from a theoretical performance limit of a bit error rate (BER) of 10-15.

[Detailed Description of the Invention]

[Technical Problem]

The disclosure provides a method and device for adaptively controlling a code rate for a staircase code in a wireless communication system.

The disclosure provides an encoding/decoding method and device including a code rate control method for a staircase code in a wireless communication system.

[Technical Solution]

According to an embodiment of the disclosure, a method of encoding a staircase code performed by a transmitting device in a wireless communication system includes adjusting a code rate to be relatively lower in at least one layer among all layers of the staircase code compared to remaining layers except for the at least one layer, and adjusting code rates of the remaining layers to maintain an overall code rate of the staircase code constant, alternately performing row-wise encoding or column-wise encoding using a component code according to an adjusted code rate in each layer of the staircase code, and transmitting a staircase code codeword generated by performing the row-wise encoding or the column-wise encoding to a receiving device.

Further, according to an embodiment of the disclosure, a transmitting device performing encoding of a staircase code in a wireless communication system includes a transceiver, and a processor configured to adjust a code rate to be relatively lower in at least one layer among all layers of the staircase code compared to remaining layers except for the at least one layer, and adjust code rates of the remaining layers to maintain an overall code rate of the staircase code constant, alternately perform row-wise encoding or column-wise encoding using a component code according to an adjusted code rate in each layer of the staircase code, and transmit, through the transceiver, a staircase code codeword generated by performing the row-wise encoding or the column-wise encoding to a receiving device.

Further, according to an embodiment of the disclosure, a method of decoding a staircase code performed by a receiving device in a wireless communication system includes receiving, from a transmitting device, a staircase code codeword in which a code rate is adjusted to be relatively lower in at least one layer among all layers of the staircase code compared to remaining layers except for the at least one layer, and recovering information bits by performing row-wise decoding or column-wise decoding using a component code according to an adjusted code rate in each layer of the staircase code for a received staircase code codeword.

Further, according to an embodiment of the disclosure, a receiving device performing decoding of a staircase code in a wireless communication system includes a transceiver, and a processor configured to receive, from a transmitting device through the transceiver, a staircase code codeword in which a code rate is adjusted to be relatively lower in at least one layer among all layers of the staircase code compared to remaining layers except for the at least one layer, and recover information bits by performing row-wise decoding or column-wise decoding using a component code according to an adjusted code rate in each layer of the staircase code for a received staircase code codeword.

[Brief Description of Drawings]

FIG. 1A is a view illustrating an example configuration of a staircase code based on a square matrix;
FIG. 1B is a view illustrating an encoding method using the square matrix-based staircase code of FIG. 1A;
FIG. 2A is a view illustrating an example configuration of a staircase code based on a non-square matrix;
FIGS. 2B and 3 are views illustrating an encoding method using the non-square matrix-based staircase code of FIG. 2A;
FIG. 4 is a view illustrating a decoding method using a square matrix-based staircase code;
FIG. 5 is a view illustrating a decoding method using a non-square matrix-based staircase code;
FIG. 6 is a view illustrating a method of controlling a code rate of a staircase code according to an embodiment of the disclosure;
FIG. 7 is a view illustrating a method of controlling a code rate by adjusting a length of information bits and a length of parity bits in each layer of a staircase code according to an embodiment of the disclosure;
FIG. 8 is a view illustrating a code rate control method omitting an initial matrix of a staircase code according to an embodiment of the disclosure;
FIGS. 9 and 10 are views illustrating code rate control methods according to embodiments of the disclosure;

FIGS. 11 and 12 are views illustrating an example of a code rate control method when an LDPC code is used as a component code in a staircase code according to an embodiment of the disclosure;

FIG. 13A is a view illustrating an encoding method including code rate control in a staircase code performed by a transmitting device of a wireless communication system according to an embodiment of the disclosure;

FIG. 13B is a view illustrating a decoding method including code rate control in a staircase code performed by a receiving device of a wireless communication system according to an embodiment of the disclosure; and

FIG. 14 is a view illustrating an example configuration of a communication device in a wireless communication system according to an embodiment of the disclosure.

[Mode for Carrying out the Invention]

Hereinafter, the operational principle of the disclosure is described below with reference to the accompanying drawings. When determined to make the subject matter of the present disclosure unclear, the details of the known functions or configurations may be skipped. Terms to be described below are terms defined considering functions in the disclosure, which may vary according to intentions or customs of users and operators. Therefore, the terms should be defined based on the overall disclosure.

For the same reasons, some elements may be exaggerated or schematically shown. The size of each element does not necessarily reflect the real size of the element. The same reference numeral is used to refer to the same element throughout the drawings.

Advantages and features of the present disclosure, and methods for achieving the same may be understood through the embodiments to be described below taken in conjunction with the accompanying drawings. However, the scope of the disclosure is not limited to embodiments described herein, but rather, other various changes may be made thereto. Various embodiments are provided for thorough disclosure of the present invention and making the category of the present invention known to one of ordinary skill in the art, and the present invention is defined only by the claims. The same reference numerals refer to the same components throughout the specification.

In this case, it will be understood that each block of the process flow diagrams and combinations of blocks in the flow diagrams may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "...unit" means a software element or a hardware element. The '...unit' plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. Further, in various embodiments of the disclosure, a "...unit" may include one or more processors.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

In embodiments of the disclosure, a user equipment (UE) may be a terminal, a mobile station (MS), a cellular phone, a smartphone, a computer, or various electronic devices capable of performing a communication function. Further, a base station (BS) is a network entity performing resource allocation to a terminal, and may be at least one of a Node B, an eNB (eNode B), a gNB (gNode B), a wireless access unit, a base station controller, or a node on a network.

Various embodiments of the disclosure may also apply to other communication systems with similar technical background or channel form. Further, various embodiments of the disclosure may be applied to other communication systems through some modifications within a range that does not significantly depart from the scope of the disclosure, as judged by those skilled in the art.

In describing various embodiments of the disclosure in detail, a communication system may use a wireless communication system, e.g., a 5G communication system based on 5G communication specifications (NR (New RAN)) proposed by 3GPP (3rd generation partnership project long term evolution), which is a wireless communication specification standardization body. Embodiments of the present invention may also be applicable to communication systems with a similar technical background with minor changes without significantly departing from the scope of the present invention, and this may be possible under the determination of those skilled in the art to which the present invention pertains. For convenience of description below, terms and names defined in 3GPP specifications may be partially used. However, the disclosure is not limited by such terms and names and may be likewise applicable to systems conforming to other standards.

A staircase code is described first to aid understanding of embodiments of the disclosure. The staircase code may be regarded as a kind of product code having characteristics of both a block code and a convolutional code. This may be easily understood through the structure of the staircase code, where one layer of a stair is formed by stacking M codewords of the same length encoded with a predetermined component code (e.g., a linear code including a low density parity check (LDPC) code or a polar code) as row/column vectors in sequence to form a matrix.

Further, by regarding the rightmost M columns/rows of the codewords constituting the staircase code as rows/columns, adding new information bits to each row, and performing encoding with the component code in the same manner, a layer composed of new M codewords may be formed. Thereafter, when the same operation is repeated in reverse when forming a next layer of the staircase code, and this process is repeated k times for a number of layers, a staircase code having k layers may be generated.

Here, double encoding proceeds on M overlapping rows (or columns) between adjacent layers of the staircase code and, when a hard decision estimated value in the case of hard decision decoding or a log likelihood ratio (LLR) value in the case of soft decision decoding (SDD) is transferred to an overlapping part of an adjacent layer through individual decoding in each layer, a decoding error rate performance gain is present therefrom. Further, the staircase code is a code having an advantage that complete parallelization of decoding of codewords corresponding to each row of a specific layer is possible, and parallelization of decoding for non-adjacent layers is also possible as needed, so a tradeoff between error rate performance and decoding delay during decoding may be adjusted.

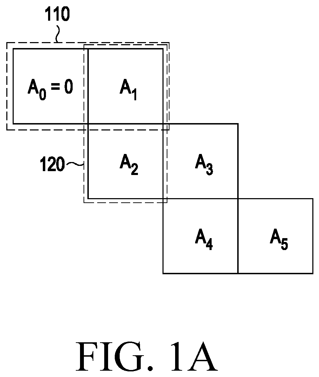

An encoding/decoding method of a staircase code based on a square matrix or a non-square matrix is described below with reference to FIGS. 1A to 4. Table 1 below defines parameters referenced in the description of the staircase code.

[Table 1]

| Parameters of staircase code | Definition |
|---|---|
| C | component code (e.g., LDPC code, polar code, linear code such as BCH code) |
| k | number of layers (or stairs) of staircase code |
| M | number of rows (or columns) of layer / size of overlapping part |
| Kc or K | number of information bits of component codeword |
| Nc or N | code length of component codeword |
| Ktot | total number of information bits of staircase code codeword |
| Ntot | total code length of staircase code codeword |
| r | number of parity bits of component codeword |
| L or L' | length of CRC code |

First, the staircase code may be divided into two types: a staircase code based on a square matrix and a staircase code based on a non-square matrix (or fat matrix). Hereinafter in the disclosure, during encoding at a transmitting device, a square matrix constituting the staircase code is denoted as "A", and a non-square matrix is denoted as "B". Further, during decoding at a receiving device, a square matrix constituting the staircase code is denoted as "X", and a non-square matrix is denoted as "Y". In the following embodiments, in a square matrix-based staircase code, a first layer includes an initial matrix and one square matrix, and each of the remaining layers includes an overlapping part with a previous layer (e.g., a square matrix) and one square matrix. In a non-square matrix-based staircase code, a first layer includes an initial matrix and one non-square matrix, and the remaining layers include an overlapping part with a previous layer (e.g., a square matrix) and one non-square matrix. When the overlapping part is regarded as one matrix, it may be understood that each layer in a square matrix-based or non-square matrix-based staircase code includes two matrices. Further, in a square matrix-based or non-square matrix-based staircase code, the number of matrices included in each of the remaining layers may be one or more. When the number of matrices included in each layer is one, it may be understood that the matrix includes the overlapping part.

FIG. 1A is a view illustrating an example configuration of a staircase code based on a square matrix.

Referring to FIG. 1A, a square matrix is a matrix in which a number of rows and a number of columns are the same, and FIG. 1A illustrates a staircase code based on a square matrix with a number of layers (k) of 5. Referring to FIG. 1A, e.g., a staircase code composed of six square matrices $A_0$, $A_1$, $A_2$, $A_3$, $A_4$, $A_5$ having a size of M×M is illustrated, but if the number of matrices is 3 or more, a staircase code including an overlapping part may be formed. The number of layers 5 represents an example and may be 2 or more. In the example of FIG. 1A, two square matrices $A_0$, $A_1$ form a first layer 110 in the staircase code, two square matrices $A_1$, $A_2$ form a second layer 120, and in the same manner, a staircase code having multiple layers (or stairs) such as a third layer, a fourth layer, and a fifth layer may be formed. Further, the first layer and the second layer have an overlapping part of $A_1$, and the second layer and the third layer have an overlapping part of $A_2$. In the same manner, other layers may also have overlapping parts. Decoding reliability may be enhanced through the overlapping part(s) in the staircase code. In the staircase code, elements of a first matrix (or initial matrix) $A_0$ may all be filled with values of 0 (or predetermined values), e.g., and may represent a starting point of the staircase code. A square matrix-based staircase code as in FIG. 1A has low complexity in encoding/decoding, so a transmitting device and a receiving device using the staircase code may be implemented with low complexity.

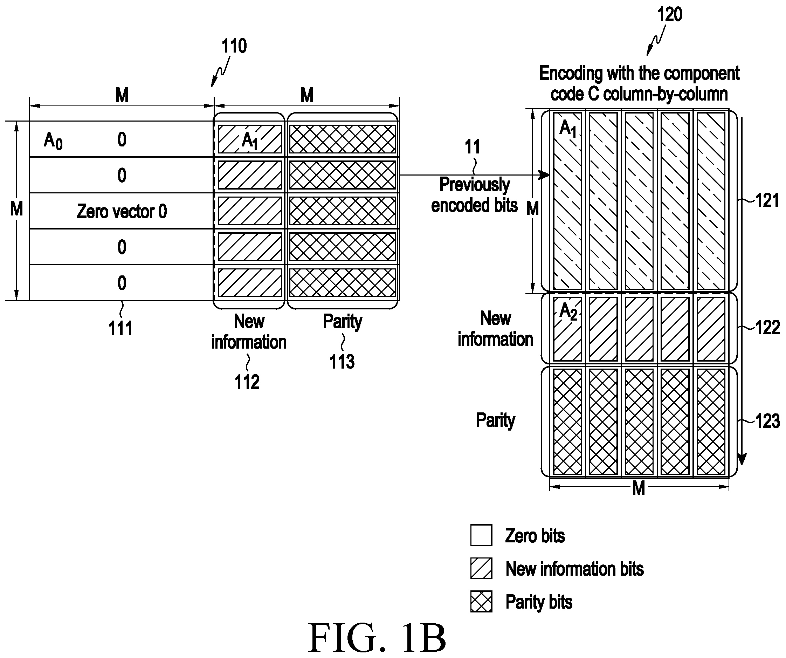

FIG. 1B is a view illustrating an encoding method using the square matrix-based staircase code of FIG. 1A.

In the example of FIG. 1B, a first layer 110 of the staircase code includes a matrix $A_0$ 111 of M×M size and a matrix $A_1$ of M×M size. All elements of the matrix $A_0$ have a value of 0 (or a predetermined value), e.g., and the matrix $A_1$ includes an information part 112 and a parity part 113. Further, new information bits fill the information part 122. For example, the parity part 113 may be filled through row-wise encoding for each of the 5 rows of the first layer 110. In other words, parity bits are generated by performing encoding using a component code C such as an LDPC code, a polar code, or a BCH code row-by-row for information bits of each row of the matrix $A_0$ and the matrix $A_1$ of the first layer 110, and the parity bits fill the corresponding row of the parity part 113.

In the example of FIG. 1B, a second layer 120 of the staircase code includes a matrix $A_1$ 121 of M×M size and a matrix $A_2$ of M×M size. The second layer 120 includes the matrix $A_1$ and the matrix $A_2$, and the matrix $A_1$ corresponds to an overlapping part of the first layer 110 and the second layer 120. The matrix $A_2$ of the second layer 120 includes an information part 122 and a parity part 123. Further, new information bits fill the information part 122. For example, the parity part 123 may be filled through column-wise encoding for each of the 5 columns of the second layer 120. Parity bits are generated by performing encoding using a component code C such as an LDPC code, a polar code, or a BCH code column-by-column for information bits of each column of the matrix $A_1$ and the matrix $A_2$ of the second layer 120, and the parity bits fill the corresponding column of the parity part 123.

As described above, an encoding method using a square matrix-based staircase code performs row-wise encoding or column-wise encoding in an alternating manner in units of layers composed of, e.g., two square matrices, and adjacent layers have one square matrix as an overlapping part. In the case of a square matrix-based staircase code, a code length $N_C$ of a component codeword in each layer composed of 2 matrices becomes simply 2 times M, and a number of information bits $K_C$ may be simply calculated as (2M-r). Here, r is a number of parity bits of the component codeword. As a generalized example, in the square matrix-based staircase code, the two matrices constituting each layer may be referred to as a first matrix and a second matrix and, when n is 2 or more, the first matrix in an nth layer overlaps the second matrix in an n-1th layer, and the first matrix in an (n+1)th layer overlaps the second matrix in the nth layer.

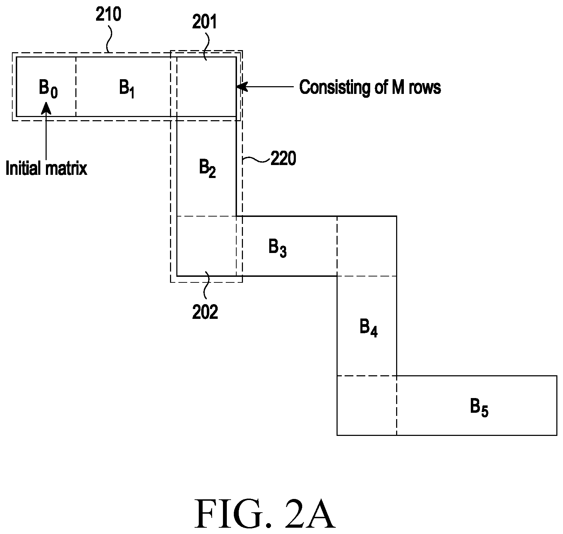

FIG. 2A is a view illustrating an example configuration of a staircase code based on a non-square matrix.

Referring to FIG. 2A, a non-square matrix is a matrix in which a number of rows and a number of columns are different, and FIG. 2A illustrates a staircase code based on a non-square matrix with a number of layers (k) of 5. Referring to FIG. 2A, a staircase code composed of a first matrix (initial matrix) $B_0$ of M×M size and a plurality of non-square matrices $B_1$, $B_2$, $B_3$, $B_4$, $B_5$ of M×(N-M) or (N-M)×M size is illustrated, e.g., but if the number of matrices constituting the staircase code is 3 or more, a staircase code including overlapping parts between adjacent layers may be formed. In FIG. 2A, a first layer 210 of the staircase code includes a matrix $B_0$ and a matrix $B_1$, a second layer 220 includes at least a part 201 of the matrix $B_1$ and a matrix $B_2$, and a third layer includes at least a part of the matrix $B_2$ and a matrix $B_3$. Further, the second layer 220 includes at least the part 201 of the matrix $B_1$ and the matrix $B_2$, and the third layer may include at least the part 202 of the matrix $B_2$ and the matrix $B_3$. In the same manner, a staircase code having multiple layers (or stairs) such as a fourth layer and a fifth layer may be formed. In FIG. 2A, the first layer 210 and the second layer 220 have an overlapping part 201 corresponding to at least a part of the matrix $B_1$, and the second layer 220 and the third layer have an overlapping part 202 corresponding to at least a part of the matrix $B_2$. In the same manner, other layers may also have overlapping parts. Decoding reliability may be enhanced through the overlapping part(s) in the staircase code.

In FIG. 2A, it is assumed that the overlapping part has a size of M×M as an example. In the staircase code, elements of a first matrix (initial matrix) $B_0$ may all be filled with values of 0 (or predetermined values), e.g., and may represent a starting point of the staircase code. A non-square matrix-based staircase code as in FIG. 2A has low complexity in encoding/decoding, so a transmitting device and a receiving device using the staircase code may be implemented with low complexity. As a generalized example, in the non-square matrix-based staircase code, the two matrices constituting each layer may be referred to as a first matrix and a second matrix, and the second matrix uses a non-square matrix. When n is 2 or more, the first matrix in an nth layer overlaps at least a part of the second matrix in an n-1th layer, and the first matrix in an (n+1)th layer overlaps at least a part of the second matrix in the nth layer. Further, a first matrix (initial matrix) of the staircase code and the first matrix corresponding to an overlapping part when n is 2 or more may use a square matrix. As an optional embodiment, at least one of the first matrix (initial matrix) and the first matrix corresponding to the overlapping part may be configured as a non-square matrix.

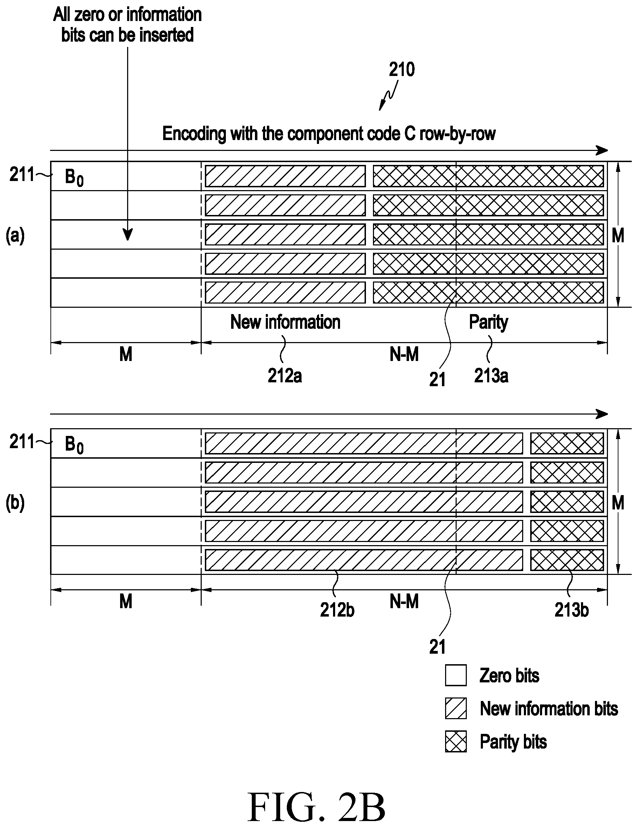

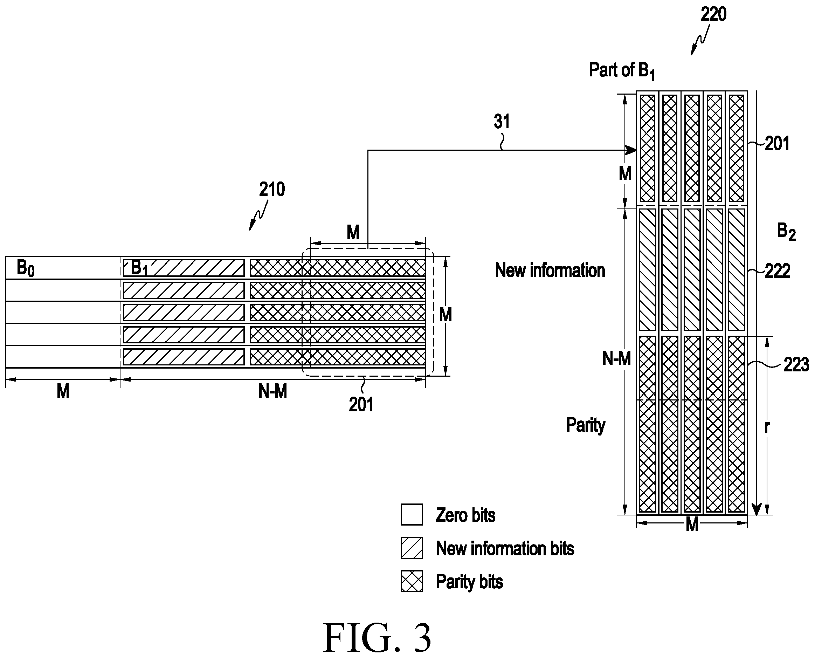

FIGS. 2B and 3 are views illustrating an encoding method using the non-square matrix-based staircase code of FIG. 2A.

In FIG. 2B, a first layer 210 of the staircase code includes a matrix $B_0$ 211 of M×M size and a matrix $B_1$ of M×(N-M) size. All elements of the matrix $B_0$ have a value of 0, e.g., and the matrix $B_1$ includes an information part 212a or 212b and a parity part 213a or 213b. FIG. 2B(a) illustrates a case where the parity part 213a is larger than the information part 212a, and FIG. 2B(b) illustrates a case where the information part 212b is larger than the parity part 213b. New information bits fill the information part 212a or 212b. For example, the parity part 213a or 213b may be filled through row-wise encoding for each of the 5 rows in the first layer 210. In FIG. 2B, the reference numeral 21 indicated by a dashed line illustrates a boundary line of an overlapping part between the first layer 210 and a second layer 220. Parity bits are generated by performing encoding using a component code C such as an LDPC code, a polar code, or a BCH code row-by-row for information bits of each row in the matrix $B_0$ and the matrix $B_1$, and the parity bits fill the corresponding row of the parity part 213a or 213b. Further, as in the example of FIG. 2B, a case where information bits and parity bits are mixed (FIG. 2B(b)) and a case where only parity bits are present (FIG. 2B(a)) may be considered in an overlapping part between adjacent layers in the staircase code.

The example of FIG. 3 illustrates an encoding method performed in the second layer 220 of the staircase code, assuming a case where the parity part 213a is larger than the information part 212a as in the example of FIG. 2B(a) for convenience of description. The method of FIG. 3 may be equally applied in the example of FIG. 2B(b). Referring to FIG. 3, the second layer 220 of the staircase code includes at least a part 201 of the matrix $B_1$ and a matrix $B_2$ of (N-M)×M size. The at least part 201 corresponding to an overlapping part between the first layer 210 and the second layer 220 in the staircase code is a matrix having a size of M×M, and the matrix $B_2$ includes an information part 222 and a parity part 223. New information bits fill the information part 222. For example, the parity part 223 may be filled through column-wise encoding for each of the 5 columns in the second layer 220. Parity bits are generated by performing encoding using a component code C such as an LDPC code, a polar code, or a BCH code column-by-column for information bits of each column of the overlapping part 201 and the matrix $B_2$, and the parity bits fill the corresponding column of the parity part 223. The overlapping part 201 may be virtually rotated by, e.g., 90 degrees together with the matrix $B_2$ during encoding. As in the method described above, an encoding method using a non-square matrix-based staircase code performs row-wise encoding or column-wise encoding in an alternating manner, and adjacent layers have at least a part of the non-square matrix as an overlapping part.

In the case of a non-square matrix-based staircase code in the disclosure, since $N_C$ and $K_C$ may not be represented only by a relationship between M and r in Table 1 above, a number of information bits and a code length of a component codeword are separately indicated. Further, in the case of a square matrix-based staircase code, $N_C$ and $K_C$ may not be separately indicated.

Specifically describing the encoding method using a non-square matrix-based staircase code in the example of FIG. 3, first, elements of an initial matrix $B_0$ of M×M size are filled with 0 meaning that no information is carried, or may be filled with information bits. In the case of a square matrix-based staircase code, matrices $B_i$, $i = k$ of square matrices of M×M size, but in the case of a non-square matrix-based staircase code, the initial matrix $B_0$ of the first layer is composed of a square matrix of M×M size, and the remaining matrices $B_i$, $ik$-square matrices of M×(N-M) or (N-M)×M size.

Step 1: To form a matrix $B_i$ (i=1, 2, ..., k) constituting the staircase code, first, a total of M(N-M-r) information bits may be inserted in row-wise or column-wise or in any method or order into the left (N-M-r) columns of $B_i$. Here, r is a number of parity bits. The example of FIG. 3 assumes a case where row-wise encoding is performed in the matrix $B_i$. Although not illustrated in FIG. 3, column-wise encoding may be performed in the matrix $B_i$, and in this case, the encoding operation in Steps 2 and 3 below may be performed in reverse of the operation when row-wise encoding is performed in the matrix $B_i$ in Step 1.

Step 2: Thereafter, by treating M bits corresponding to the overlapping part 201 with the matrix $B_{i-1}$ of a previous layer as information bits in each row, r parity bits 223 may be generated column-wise or row-wise by performing encoding using the component code C for a total of (N-r) information bits including newly inserted (31) information bits 222. A new layer (stair) (or matrix) may be generated by applying the corresponding operation equally to all rows.

Step 3: From the second layer, operations may be divided into two according to a layer index (stair index) i. For example, when i is even, the rightmost M columns of the matrix $B_{i-1}$ of a previous layer may be virtually rotated by 90° counterclockwise. In other words, an overlapping part may be configured with the rightmost column as the topmost row. Based on the matrix composed of M rows thus created, the operations of Steps 1 and 2 above may be performed to generate the matrix $B_i$ on the right side. The matrix $B_i$ of the new layer generated in this manner is attached to the lower surface of the rightmost M columns of the matrix $B_{i-1}$ of the previous layer in the original structure before virtual rotation. Further, when the layer index i is even, since a previous layer is a layer where row-wise encoding was performed, for encoding in a next layer, for the rightmost M columns of the previous layer, the first row of the next layer may be configured starting from the rightmost column, and a total of M columns of the previous layer may be rotated in order to become M rows of the next layer.

When the layer index i is odd, the operations of Steps 1 and 2 above may be performed to generate the matrix $B_i$ on the right side based on the bottom M rows of the matrix $B_{i-1}$ of the previous layer. When the layer index is i, row-wise encoding may be performed directly on the bottom M rows of the previous layer (i-1), and in this case, an operation such as 90-degree rotation is not required.

Step 4: When the operations of Steps 1 to 3 above are repeated a total of k times, a staircase code composed of k layers may be generated.

The encoding method using an overlapping part and virtual rotation in Steps 1 to 4 above may be applied in the same manner to a square matrix-based staircase code.

From the codeword of the staircase code generated in the manner described above, when no information is carried in the initial matrix $B_0$ of the first layer, a codeword obtained by reading all bits of the matrix $B_1$ in the first layer except for the initial matrix $B_0$ and the matrices $B_2$, $B_3$, ... in the remaining layers as a row or column vector regardless of order may be defined as a final codeword. As an optional embodiment, when information bits are included in the initial matrix $B_1$ in the first layer, a codeword obtained by reading all bits of all matrices $B_0$, $B_1$, $B_2$, $B_3$, ... including the initial matrix $B_0$ in the first layer and the remaining layers as a row or column vector regardless of order may be defined as a final codeword. This definition may be applied to both a square matrix-based staircase code and a non-square matrix-based staircase code.

Hereinafter, for convenience, it is assumed in the description of the disclosure that information bits are not included in the initial matrix $B_0$, and for example, values of 0 are filled.

Table 2 below illustrates a code rate ($R_C$) of a component codeword and a total code rate ($R_{tot}$) of the staircase code in the non-square matrix-based staircase code described above.

[Table 2]

|  | Square matrix case (N=2M) | Fat matrix case (N>>M) |
|---|---|---|
| COMPONET CODE PERSPECTIVE | $R_c = \dfrac{K}{N} = \dfrac{2M-r}{2M} = 1 - \dfrac{r}{2M}$ | $R_c = \dfrac{K}{N} = \dfrac{N-r}{N} = 1 - \dfrac{r}{N}$ |
| TOTAL CODE PERSPECTIVE | $R_c = \dfrac{kM(M-r)}{kM^2} = 1 - \dfrac{r}{M}$ | $R_c = \dfrac{kM(N-M-r)}{kM(N-M)} = 1 - \dfrac{r}{N-M}$ |

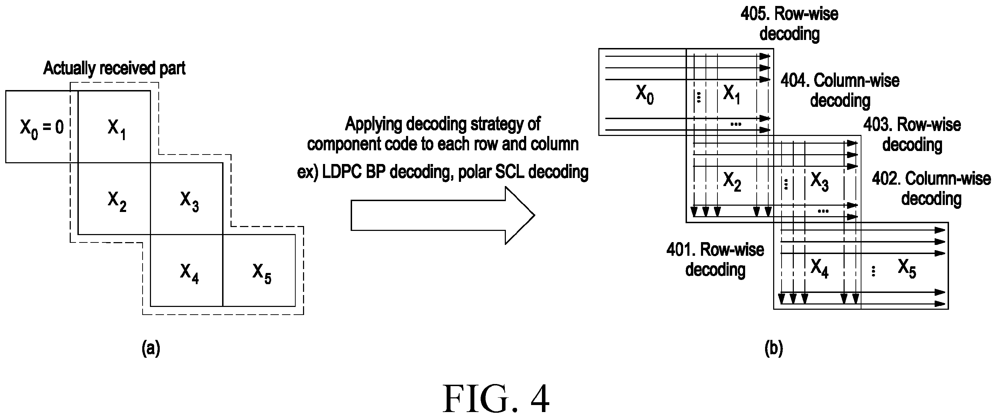

In the case of a non-square matrix-based staircase code, a total code length $N_{tot}$ of the codeword may be calculated as kM(N-M), and in the case of a square matrix-based staircase code, it may be represented in a simpler form as $kM^2$. A number of information bits may be represented as kM(N-r) in the case of a non-square matrix-based staircase code or kM(M-r) in the case of a square matrix-based staircase code. In the case of a square matrix-based staircase code, comparing a code rate $R_c = 1 - \dfrac{r}{N}$ of a component codeword and a total code rate $R_{tot} = \dfrac{N-r}{N-M}$, it may be identified that the code rate of the component codeword is higher. In other words, when the code rate of the entire codeword of the staircase code is increased, the code rate of the component codeword increases to a larger value, which greatly affects the performance of the component code. FIG. 4 is a view illustrating a decoding method using a square matrix-based staircase code.

A square matrix-based staircase code may be encoded by the encoding method of FIG. 1B as described above, and may be decoded by the decoding method of FIG. 4. Decoding may use decoding using a component code C such as an LDPC code, a polar code, or a BCH code used during encoding.

First, it is assumed that a transmitting device encodes and transmits a staircase code composed of a plurality of

square matrices $A_0$, $A_1$, $A_2$, $A_3$, $A_4$, $A_5$ having a size of M×M using a square matrix-based staircase code with a number of layers (k) of 5 as in the examples of FIGS. 1A and 1B. A receiving device may receive/obtain a staircase code composed of 6 square matrices $X_0$, $X_1$, $X_2$, $X_3$, $X_4$, $X_5$ having a size of M×M as in FIG. 4(a). In this case, if the initial matrix $A_0$ has, e.g., a value of 0 (or a predetermined value), what is actually received at the receiving device is a staircase code of 5 square matrices $X_1$, $X_2$, $X_3$, $X_4$, $X_5$, and the receiving device fills the initial matrix $X_0$ of the staircase code with a value of 0 (or a predetermined value) like the initial matrix $A_0$. As in FIG. 4(b), the receiving device performs row-wise decoding on the matrices $X_4$, $X_5$ of the fifth layer in step 401, performs column-wise decoding on the matrices $X_3$, $X_4$ of the fourth layer in step 402, and in the same manner, alternately performs row-wise decoding or column-wise decoding on the third layer to the first layer in steps 403 to 405 to decode information bits. Further, as an optional example, it is also possible to alternately perform row-wise decoding or column-wise decoding in order from the first layer to the fifth layer in reverse order of FIG. 4(b) to decode information bits.

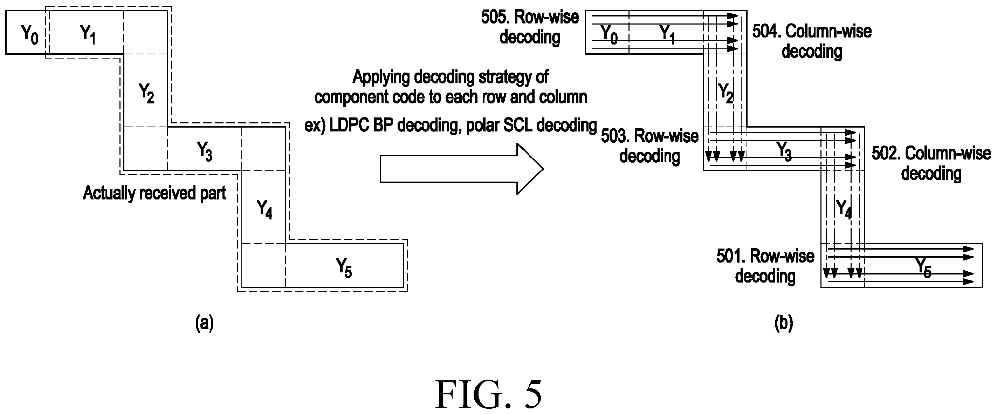

FIG. 5 is a view illustrating a decoding method using a non-square matrix-based staircase code.

A non-square matrix-based staircase code may be encoded by the encoding method of FIG. 3 as described above, and may be decoded by the decoding method of FIG. 5. Decoding may use decoding using a component code C such as an LDPC code, a polar code, or a BCH code used during encoding.

First, it is assumed that a transmitting device encodes and transmits a staircase code composed of a first matrix (initial matrix) $B_0$ of M×M size and 5 non-square matrices $B_1$, $B_2$, $B_3$, $B_4$, $B_5$ of M×(N-M) or (N-M)×M size as a non-square matrix-based staircase code with a number of layers (k) of 5 as in the examples of FIGS. 2A to 3. A receiving device may receive/obtain a first matrix (initial matrix) $Y_0$ of M×M size and 5 non-square matrices $Y_1$, $Y_2$, $Y_3$, $Y_4$, $Y_5$ of M×(N-M) or (N-M)×M size as in FIG. 5(a). In this case, if the initial matrix $B_0$ has, e.g., a value of 0 (or a predetermined value), what is actually received at the receiving device is a staircase code of 5 non-square matrices $Y_1$, $Y_2$, $Y_3$, $Y_4$, $Y_5$, and the receiving device fills the initial matrix $Y_0$ of the staircase code with a value of 0 (or a predetermined value) like the initial matrix $B_0$. As in FIG. 5(b), the receiving device performs row-wise decoding on the matrices $Y_4$, $Y_5$ of the fifth layer in step 501, performs column-wise decoding on the matrices $Y_3$, $Y_4$ of the fourth layer in step 502, and in the same manner, alternately performs row-wise decoding or column-wise decoding on the third layer to the first layer in steps 503 to 505 to decode information bits. Further, as an optional example, it is also possible to alternately perform row-wise decoding or column-wise decoding in order from the first layer to the fifth layer in reverse order of FIG. 5(b) to decode information bits.

Due to the structural characteristics of the staircase code, when an incorrect reliability value (e.g., a value having a small absolute value of reliability or an opposite sign from an original value) is propagated to other layers through an overlapping part of the staircase code from an adjacent layer during a decoding process, the error correction capability of a component codeword decoded with the incorrect reliability value at the receiving device is affected, which leads to error propagation causing performance degradation during decoding of the entire staircase code codeword.

In an existing staircase code structure, a simple method is adopted in which encoding and decoding corresponding to the same code rate are performed for the same information bit lengths for all rows or columns of all layers. When the same code rate is applied to all layers of the staircase code in this manner, a decoding initial layer that does not receive sufficient protection from an adjacent layer may have relatively lower error correction capability compared to other layers. The decoding initial layer may be, e.g., a first layer or a last layer among all layers of the staircase code.

The disclosure proposes a method of adjusting/controlling a code rate for each layer of a staircase code. In other words, decoding capability of a decoding initial layer may be enhanced by adjusting the code rate of the decoding initial layer to be lower (increasing a length of parity bits while fixing a number of information bits, or increasing both lengths of information bits and parity bits) or by maintaining the code rate of the decoding initial layer the same as other layers while increasing a code length itself (e.g., increasing lengths of information bits and parity bits in the decoding initial layer at the same ratio). Accordingly, the error propagation phenomenon described above may be prevented in advance in the staircase code and overall error rate performance may be enhanced. In this case, in order to maintain the same overall resource allocation amount scheduled in the staircase code, an additional operation of appropriately adjusting/controlling code rates in layers other than the decoding initial layer whose code rate has been adjusted to match a number of information bits and a number of encoded bits from the perspective of the entire staircase code may be performed. In other words, when an overall code rate of the staircase code is determined as $R_{tot} = \dfrac{K_{tot}}{N_{tot}}$, if the decoding initial layer is the first layer with layer index i=1 and the code rate of the matrix $B_1$ of the first layer is increased by $\delta$, the code rate of at least one of the matrices $B_i$ of the other layers (i=2, ..., k) except for the first layer may be appropriately adjusted/controlled to maintain the total code rate $R_{tot}$.

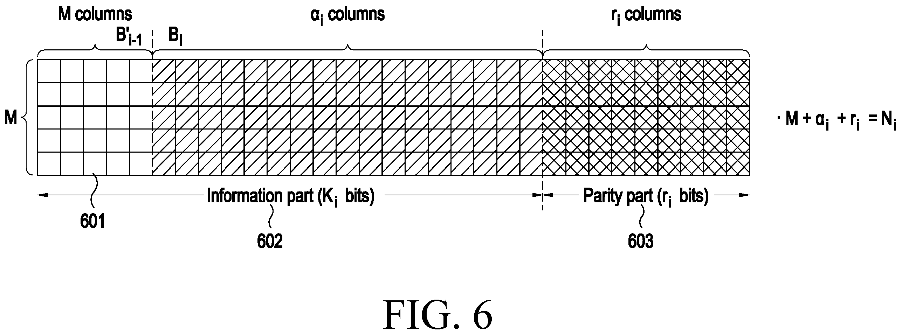

FIG. 6 is a view illustrating a method of controlling a code rate of a staircase code according to an embodiment of the disclosure.

In the example of FIG. 6, among the parameters of the staircase code in Table 1 above, the parameters ($N_c$, $K_c$, $rN_i$, $K_i$, $r_i$) adjusted/controlled in each layer of the staircase code (where i is a layer index, i=1, 2, ..., k). $N_c$ is a code length of a component codeword, $K_c$ is a number of information bits of a component codeword, and r is a number of parity bits of a component codeword and, when the code rate control method of the disclosure is not applied, the parameters ($N_c, K_c, r$ in all layers of the staircase code. When the code rate control method of the disclosure is applied, the parameters ($N_i, K_i, r_i$) may be adjusted/controlled in each layer of the staircase code. In the ith layer of the staircase code, $N_i$ represents an adjusted/controlled code length of a component codeword, $K_i$ represents an adjusted/controlled number of information bits of a component codeword, and $r_i$ represents an adjusted/controlled number of parity bits of a component codeword.

Equation 1 below illustrates an example of defining parameters ($N_i, K_i, r_i$) controlled in the disclosure.

[Equation 1]

$$K_i = M + \alpha_i \ \ (\alpha_i \in \mathbb{Z}^+, \mathbb{Z}^+ = \{0,1,2,\dots\})$$
$$r_i \in \mathbb{Z}^+$$
$$N_i = K_i + r_i$$

Referring to FIG. 6, an ith layer may be composed of a matrix $B'_{i-1}$ having a size of M×M and a matrix $B_i$ having a size of M×($N_i$-M). Here, $M + \alpha_i + r_i = N_{i,\ i-1}$ having a size of M×M may be an overlapping part 601 between a previous layer i-1 and layer i. Specifically, each of the M component codewords of the ith layer includes a total of $K_i$ information bits as a combination of M information bits from an overlapping part 601 with a previous layer and $\alpha_i$ new information bits, and the transmitting device generates $r_i$ parity bits 603 by performing encoding using a component code C such as an LDPC code, a polar code, or a BCH code row-by-row for $K_i$ information bits 602 in each row, and fills the parity bits 603 in the corresponding row of the parity part. Through row-wise encoding in each layer of the ith layer, a component codeword composed of a total of $N_i$ encoded bits is generated. Therefore, a code rate $R_{c,i}$ of a component codeword in the ith layer may be calculated/defined as in Equation 2 below.

[Equation 2]

$$R_{c,i} = \frac{K_i}{N_i} = \frac{M + \alpha_i}{M + \alpha_i + r_i} = 1 - \frac{r_i}{M + \alpha_i + r_i}$$

Using the parameters defined as in Equations 1 and 2 above, a number of new information bits, a number of parity bits, and a code rate in each layer of the staircase code may be controlled to have different values, but in order to maintain consistency of a resource allocation resource amount from a system perspective between when the code rate control method of the disclosure is applied and when it is not applied, total sum conditions for new information bits $\alpha_i$ and parity bits $r_i$ may be defined as in Equation 3 below. Various combinations of code rate control for $\alpha_i$ and $r_i$ may be performed in the disclosure, and specific embodiments are described below.

[Equation 3]

$$\sum_{i=1}^{k} M \cdot \alpha_i = K_{tot} \ \ \rightarrow \ \ \sum_{i=1}^{k} \alpha_i = \frac{K_{tot}}{M}$$
$$\sum_{i=1}^{k} M(N_i - M) = N_{tot} \ \ \rightarrow \ \ \sum_{i=1}^{k}(\alpha_i + r_i) = \frac{N_{tot}}{M}$$

In the disclosure, by adjusting a code rate to be relatively lower in a decoding initial layer of a staircase code compared to remaining layers and adjusting code rates of the remaining layers to maintain an overall code rate of the staircase code constant according to the total sum conditions of Equation 3 above, decoding performance may be enhanced. In the following embodiments, $\alpha_i$ and $r_i$ mean a number of new information bits and a number of parity bits, respectively, and may also represent new information bits and parity bits. Further, since encoding of the staircase code is performed by alternating row-wise encoding and column-wise encoding, the embodiment described above in FIG. 6 may be applied in the same manner to layer(s) where column-wise encoding is performed.

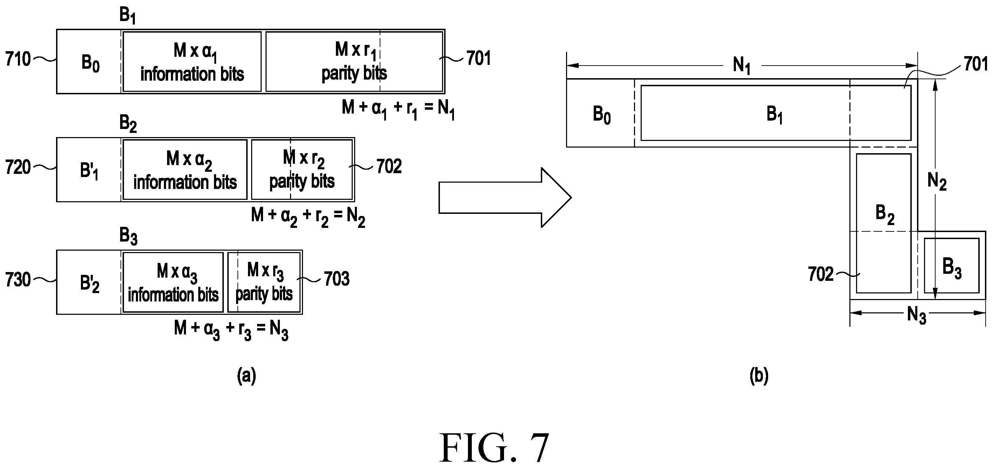

FIG. 7 is a view illustrating a method of controlling a code rate by adjusting a length of information bits and a length of parity bits in each layer of a staircase code according to an embodiment of the disclosure.

Referring to FIG. 7, a first layer 710 of the staircase code includes a matrix $B_0$ of M×M size and a matrix $B_1$ of M×$N_1$ size. In FIG. 7(a), the matrix $B_1$ includes new information bits and parity bits. A second layer 720 includes a matrix $B'_1$ of M×M size and a matrix $B_2$ of M×$N_2$ size. The matrix $B_2$ includes new information bits and parity bits. Further, a third layer 730 includes a matrix $B'_2$ of M×M size and a matrix $B_3$ of M×$N_2$ size. The matrix $B_3$ includes new information bits and parity bits. Reference numerals 701, 702, 703 correspond to overlapping parts with adjacent layers in the respective layers. The overlapping part 701 may correspond to the matrix $B'_1$, and the overlapping part 702 may correspond to the matrix $B'_2$. In

FIG. 7(b), parity bits are generated by performing encoding using a component code C such as an LDPC code, a polar code, or a BCH code row-by-row for information bits of each row of the matrix $B_0$ and the matrix $B_1$ of the first layer 710, and the parity bits fill the corresponding row. For each of the columns of the second layer 720, parity bits are generated by performing encoding using the component code C column-wise, and the parity bits fill the corresponding row. For each of the columns of the second layer 720, parity bits are generated by performing encoding using the component code C column-wise, and the parity bits fill the corresponding row.

In the example of FIG. 7, when the first layer 710 is a decoding initial layer, the code rate of the first layer 710 may be adjusted/controlled such that at least one of new information bits $\alpha_i$ and parity bits $r_i$ is included more in the matrix $B_1$ of $M \times N_1$ size compared to other layers. Further, according to the total sum conditions of Equation 3 above, new information bits $\alpha_i$ and parity bits $r_i$ may be adjusted/controlled in the second layer 720 and the third layer 730 to maintain a constant overall code rate of the staircase code. The example of FIG. 7 illustrates an example in which adjustment/control is performed such that new information bits and parity bits are included less in the second layer 720 and the third layer 730 than in the first layer 710.

In the disclosure, a criterion for determining a combination of parameters $(N_i, K_i, r_i)$ when the code rate control method is applied may be determined according to where the decoding initial layer is. The decoding initial layer may be, e.g., a first layer or a last layer among all layers of the staircase code, and this may be determined based on whether decoding is started from the first layer or the last layer at the receiving device. As an optional embodiment, the decoding initial layer may be determined according to a type of decoder used at the receiving device. As an optional embodiment, the decoding initial layer may be indicated through configuration information transmitted from the transmitting device to the receiving device, or may be indicated through control information transmitted from the receiving device to the transmitting device.

Further, the parameters $(N_i, K_i, r_i)$ may determine a possible combination according to a channel environment and, when it is assumed that errors frequently occur in a specific band or bits corresponding to the band empirically or experimentally, a method of adjusting a code rate of a layer including the corresponding bit index in the staircase code may also be considered. Further, a method of adjusting a combination of parameters $(N_i, K_i, r_i)$, i.e., a code rate, according to a modulation order $(Q_m)$ may also be considered.

In the disclosure, for adaptive code rate control of a staircase code, new information bits $\alpha_i$ and parity bits $r_i$ in each layer of the staircase code may be adjusted according to one of the following Method 1 through Method 4.

- Method 1: fixed $\alpha_i = \alpha_i = r$
- Method 2: fixed $\alpha_i = \alpha$, $_i$
- Method 3: variable $\alpha_i$, fixed $r_i = r$
- Method 4: variable $\alpha_i$, variable $r_i$

Information indicating a method applied for adaptive code rate control among Method 1 through Method 4 above may be provided from a transmitting device (e.g., a base station) to a receiving device (e.g., a terminal) through signaling information (control information). The signaling information may be transmitted from the transmitting device to the receiving device using Radio Resource Control (RRC) when determining that there is no significant change in the applied method according to a communication system environment and target scenario, or using at least one combination of Downlink Control Information (DCI) and MAC-CE (Medium Access Control-Control Element) when the adaptively applied method needs to be changed.

In the disclosure, a code rate control method may be indicated from the transmitting device to the receiving device through examples such as the following. For example, the control information (RRC or DCI) *("CodeRateForStairs")* indicating a code rate adjustment method may be configured as a 4-bit sequence and, when the 4-bit sequence is "00XX", it may indicate Method 1, when it is "01XX", it may indicate Method 2, when it is "10XX", it may indicate Method 3 and, when it is "11XX", it may indicate Method 4. In the 4-bit sequence, the first 2 bits may indicate one of the 4 methods of Method 1 through Method 4 above, and the remaining 2 bits (XX) may support a degree of freedom to indicate detailed options for each method. The code rate control method using the 4-bit sequence illustrates an example and, when selecting the degree of freedom to indicate detailed options for each method more specifically according to a channel environment, a terminal category, a component code used, etc., the control information may be configured as a sequence of 4 bits or more.

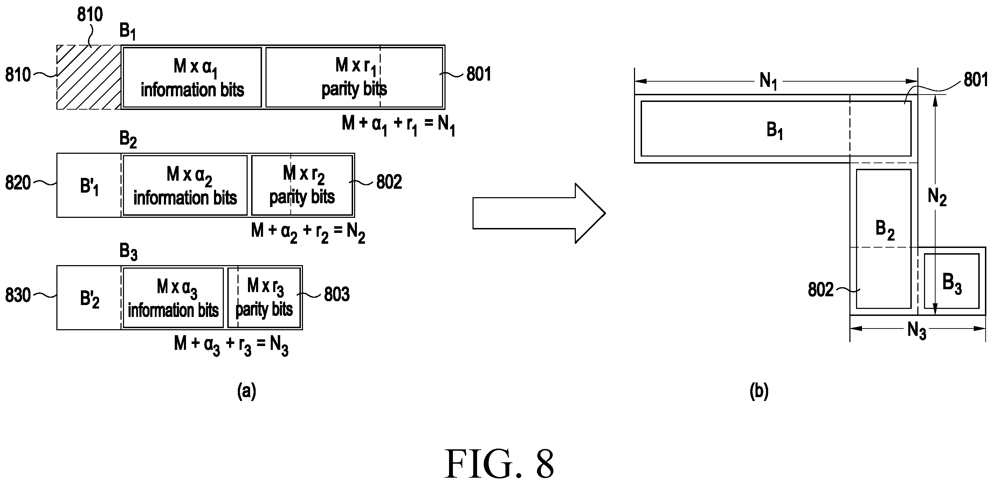

When the code rate control method of the disclosure is applied, a code rate may be freely adjusted/controlled in each layer of the staircase code. In this case, as an optional embodiment, in order to maintain the form of the staircase code, a first matrix (or initial matrix) $B_0$ 810 of $M \times M$ size in which elements of the matrix are all filled with values of 0 (or predetermined values) may be omitted in the staircase code as in the example of FIG. 8.

FIG. 8 is a view illustrating a code rate control method omitting an initial matrix of a staircase code according to an embodiment of the disclosure.

Referring to FIG. 8, a first layer 810 of the staircase code includes a matrix $B_1$ of $M \times N_1$ size. In FIG. 8(a), the matrix $B_1$ includes new information bits and parity bits. In this case, a first matrix (or initial matrix) $B_0$ 810 of $M \times M$ size may

be omitted unlike the example of FIG. 7. A second layer 820 includes a matrix $B'_1$ of $M \times M$ size and a matrix $B_2$ of $M \times N_2$ size. The matrix $B_2$ includes new information bits and parity bits. Further, a third layer 830 includes a matrix $B'_2$ of $M \times M$ size and a matrix $B_3$ of $M \times N_2$ size. The matrix $B_3$ includes new information bits and parity bits. Reference numerals 801, 802, 803 correspond to overlapping parts with adjacent layers in the respective layers. The overlapping part 801 may correspond to the matrix $B'_1$, and the overlapping part 802 may correspond to the matrix $B'_2$. In FIG. 8(b), parity bits are generated by performing encoding using a component code C row-by-row for information bits of each row of the matrix $B_0$ and the matrix $B_1$ of the first layer 810, and the parity bits fill the corresponding row. For each of the columns of the second layer 820, parity bits are generated by performing encoding using the component code C column-wise, and the parity bits fill the corresponding row. For each of the columns of the second layer 820, parity bits are generated by performing encoding using the component code C column-wise, and the parity bits fill the corresponding row.

In the example of FIG. 8, when the first layer 810 is a decoding initial layer, the code rate of the first layer 810 may be adjusted/controlled such that at least one of new information bits $\alpha_i$ and parity bits $r_i$ is included more in the matrix $B_1$ of $M \times N_1$ size compared to other layers. Further, according to the total sum conditions of Equation 3 above, new information bits $\alpha_i$ and parity bits $r_i$ may be adjusted/controlled in the second layer 820 and the third layer 830 to maintain a constant overall code rate of the staircase code. The example of FIG. 8 illustrates an example in which adjustment/control is performed such that new information bits and parity bits are included less in the second layer 820 and the third layer 830 than in the first layer 810.

Specific examples of Method 1 through Method 4 above is described below, divided into [Embodiment 1] through [Embodiment 4].

[Embodiment 1: fixed $\alpha_i$, fixed $r_i$]

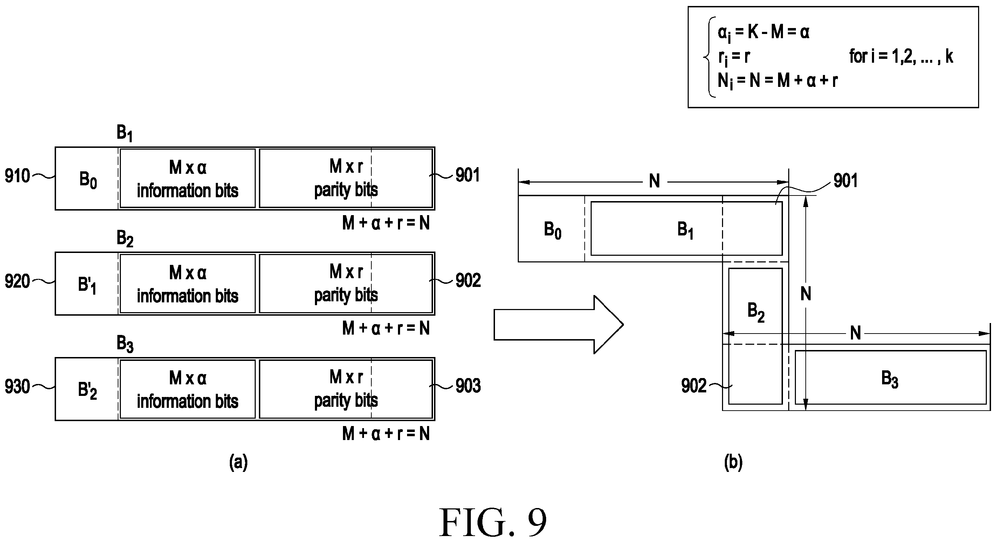

Embodiment 1 corresponds to a case where the code rate control method of the disclosure is not applied in the staircase code. In this case, as in the examples of FIG. 9(a), (b), a number of new information bits $\alpha_i$ and a number of parity bits $r_i$ are the same in each layer 910, 920, 930 including overlapping parts 901, 902, 903. When a total number of information bits $K_{tot}$ to be transmitted by a transmitting device and a total code rate $R_{tot}$ are determined through the configuration information (control information) of Table 1 above, a total code length $N_{tot}$ is determined, and encoding parameters (a number of layers k, a number of rows M in each layer) required for the staircase code may be determined from various conditions such as requirements of a communication system or other environmental factors. In this case, parameters of a component codeword of each layer may be calculated as in Table 3 below.

[Table 3]

| Code parameters determined by k, M, $N_{tot}$, $K_{tot}$ | |
|---|---|
| code length N of component codeword | N = Ntot / kM + M |
| number r of parity bits of component codeword | r = N - M - Ktot/ kM |
| number K of information bits of component codeword (including overlapping part) | K = N - r |
| code rate R of component codeword | R = K / N |

In Method 1, a number $\alpha_i$ of new information bits in a component codeword of each layer is fixed to $\alpha_i = K - M = \alpha$, $r_i$ is fixed to the same value as the r value calculated above. In other words, both $\alpha_i$ and $r_i$ are set to fixed values. As described above, Method 1 may be indicated by setting the first 2 bits of the sequence "CodeRateForStairs", which is control information transmitted by the transmitting device, to "00". Method 1 may ensure consistency and simplicity of the system. In Method 1 above, since the same encoder and decoder may be used for all codewords of all layers in the staircase code, simplicity from a design and operation perspective may be ensured.

[Embodiment 2: fixed $\alpha_i$, variable $r_i$]

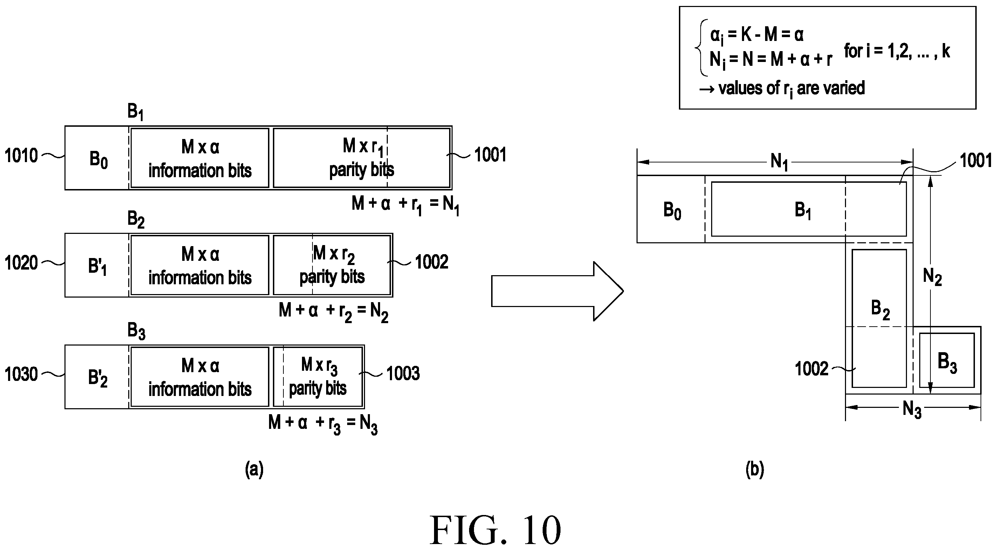

Embodiment 2 corresponds to a case where the code rate control method of the disclosure is applied in the staircase code. In this case, as in the examples of FIG. 10(a), (b), a number $\alpha_i$ of new information bits is the same in each layer 1010, 920, 930 including overlapping parts 1001, 1002, 1003, and a number of parity bits $r_i$ may be varied. As in Embodiment 1, a total number of information bits $K_{tot}$ to be transmitted by a transmitting device and a total code rate $R_{tot}$ may be determined through the configuration information (control information) of Table 1 above. Further, parameters of a component codeword of each layer may be calculated as in Table 3 above. In Method 2, a number $\alpha_i$ of new information bits in a component codeword of each layer may be adjusted as $\alpha_i = K - M = \alpha$. $r_i$ of parity bits of component codewords of a layer to which protection is applied by adjusting the code rate may be increased from a predetermined value r. In this case, in other layers, new information bits $\alpha_i$ and parity bits $r_i$ may be adjusted/controlled according to the total sum conditions of Equation 3 above to maintain a constant overall code rate of the staircase code. For example, when the decoding initial layer is the first layer including the matrix $B_1$, a method of determining a number $r_i$ of parity bits of each layer may be as follows.

A number of parity bits is increased by 10% to enhance decoding capability in the first layer including the matrix $B_1$. In Equation 4, a parity bit increment $\Delta r$ may be calculated by any condition or formula.

[Equation 4]

$$r_1 = r + \Delta r = 1.1r \ \left( \Delta r = \frac{1}{10}r \right)$$

In the last layer including the matrix $B_k$, an existing number of parity bits may be maintained as needed.

A parity bit increment generated by code rate adjustment in the first layer including the matrix $B_1$ may be compensated as in Equation 5 below by reducing a number of parity bits of middle layers.

[Equation 5]

$$r_1 = r + \Delta r, \ r_i = r - \frac{\Delta r}{k-2}, \ r_k = r \ \rightarrow \ \sum_{i=1}^{k} r_i = kr$$

Accordingly, the total sum conditions of Equation 5 above may be satisfied, and a condition for an increment sequence may be summarized as in Equation 6 below.

[Equation 6]

$$\Delta r_i \quad \text{for} \quad i = 1, \dots, k \ \text{ such as } \ r_i = r + \Delta r_i \ \text{ and } \ \sum_{i=1}^{k} \Delta r_i = 0$$

In Method 2 above, for a specific linear code (e.g., LDPC code in an NR system), it is also possible to, e.g., fix a number of information bits and adjust only a number of parity bits in each layer. In this case, consistency between an encoder at a transmitting device and a decoder at a receiving device is maintained, which may ensure simplicity of the system. Further, Method 2 may enhance overall decoding performance by protecting a specific layer vulnerable to errors (e.g., a first layer or a last layer) in the staircase code, thereby preventing error propagation phenomenon in advance.

As an optional embodiment, the increment sequence described in Equation 6 may have, e.g., 4 options (i.e., additional methods for code rate control in each layer of the staircase code) through the last 2 bits (XX) of "CodeRateForStairs" in the control information indicating the code rate control method. (In this case, the first 2 bits of "CodeRateForStairs" are indicated as "01" to indicate code rate adjustment Method 2.) As an example, for "CodeRateForStairs" = 01XX, code rate control methods that may be selected/indicated according to the last 2 bits (XX) are as follows for 4 cases. In this case, an increase in a number of parity bits brings about a decrease in a code rate, and as a result, decoding capability may be enhanced.

When XX = 00: In a manner of decreasing a code rate of the first layer of the staircase code, maintaining a code rate of the last layer, and increasing code rates of middle layers, a code rate reduction amount of the first layer may be compensated in other layers as in Equation 7 below.

[Equation 7]

$$\Delta r_1 = \lambda r, \ \Delta r_i = -\frac{\lambda}{k-2}r \ (\text{for } i = 2, \dots, k-1), \ \Delta r_k = 0 \quad \text{with } 0 < \lambda < 1$$

When XX = 01: As in Equation 8 below, by decreasing code rates of D front layers among k layers in the staircase code and increasing code rates of remaining rear (k-D) layers, decoding capability for the D front layers may be enhanced.

[Equation 8]

$$\Delta r_i = \lambda r \ (\text{for } i = 1, \dots, D), \ \Delta r_i = -\frac{D\lambda}{k-D-1}r \ (i = D+1, \dots, k-1), \ \Delta r_k = 0 \ (0 < \lambda < 1)$$

Here, a value of D may use a previously set value, and the option of XX = 01 assumes that decoding starts from the first layer.

When XX = 10: This is the opposite case of the XX=00 case above. In this case, by decreasing a code rate of the last layer, maintaining a code rate of the first layer, and increasing code rates of middle layers, a code rate reduction amount of the last layer may be compensated as in Equation 9 below.

[Equation 9]

$$\Delta r_1 = 0, \ \Delta r_i = -\frac{\lambda}{k-2} r \left(\text{for } i = 2, ..., k-1\right), \ \Delta r_k = \lambda r \quad \text{with } 0 < \lambda < 1$$

The case of XX = 10 may be applied when decoding of the staircase code starts from the last layer.

When XX = 11: As in Equation 10 below, by decreasing code rates of D rear layers among k layers in the staircase code and increasing code rates of remaining front (k-D) layers, decoding capability for the D rear layers may be enhanced.

[Equation 10]

$$\Delta r_i = \lambda r \ (\text{for } i = 1, ..., D), \ \Delta r_i = -\frac{D\lambda}{k-D-1} r \ (i = D+1, ..., k-1), \ \Delta r_k = 0 \ (0 < \lambda < 1)$$

Here, a value of D may use a previously set value, and the option of XX = 11 assumes that decoding of the staircase code starts from the last layer.

The method of controlling an increment sequence in the code rate control method of the disclosure is not limited to the 4 methods exemplified for XX = 00, 01, 10, 11 above, and an increment sequence may be represented in various ways by extending a number of sequence bits of control information to 4 bits or more.

[Embodiment 3: fixed $\alpha_i$, variable $r_i$, using LDPC code as component code]

Embodiment 3 may be applied when using the code rate control method of the disclosure in a staircase code as in Embodiment 2, but when the component code uses an LDPC code in an NR system. As described above, an LDPC code in an NR system may, e.g., fix a number of information bits and adjust only a number of parity bits in each layer. In this case, a code rate of the staircase code may be adjusted by maintaining a number of new information bits $\alpha_i$ the same in each layer of the staircase code and varying only a number of parity bits $r_i$. In this case, consistency between an encoder at a transmitting device and a decoder at a receiving device is maintained, which may ensure simplicity on the system. When a length of information to be transmitted by a transmitting device and a parity-check matrix (PCM) for encoding/decoding the information are defined, a number $r_i$ of parity bits may be adjusted by adjusting a number of rows and columns of the parity-check matrix.

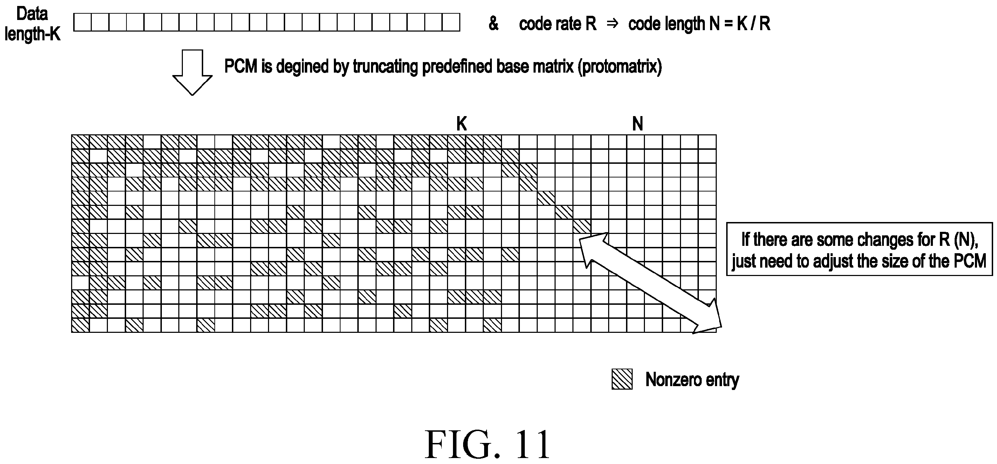

FIG. 11 is a view illustrating an example of a code rate control method when an LDPC code is used as a component code in a staircase code according to an embodiment of the disclosure.

Referring to FIG. 11, a size of the parity-check matrix may be increased by adding one row and one column together each time a number of bits corresponding to "nonzero entry" in the parity-check matrix for encoding/decoding information bits of a specific length K is increased by one. An area where bits corresponding to "nonzero entry" in the parity-check matrix of FIG. 11 are present is a part shaded as "nonzero entry" in FIG. 11, and an empty area may be filled with a matrix corresponding to 0, for example. As in the example of FIG. 11, when an LDPC code is used as a component code, a code rate of the staircase code may be adjusted by maintaining a number of information bits the same in each layer of the staircase code and varying only a number of parity bits.

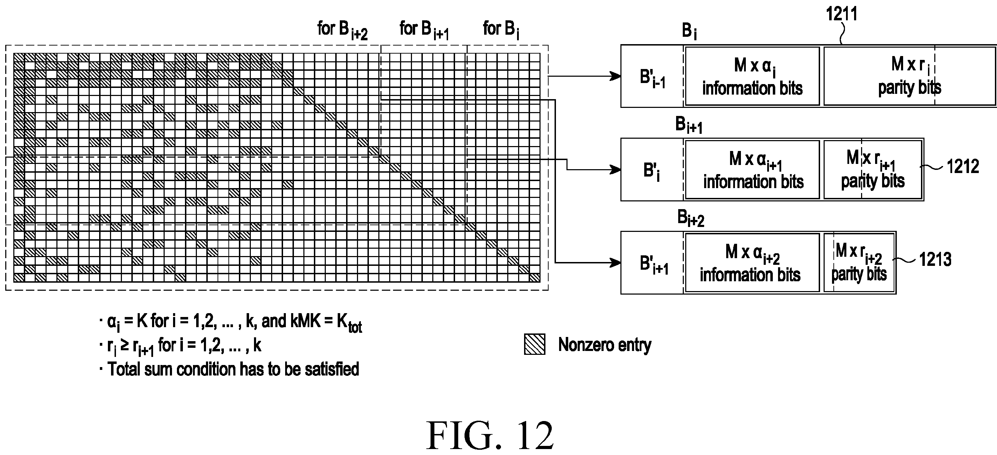

FIG. 12 is a view illustrating an example of a code rate control method when an LDPC code is used as a component code in a staircase code according to an embodiment of the disclosure.

The example of FIG. 12 illustrates an example of layers 1211, 1212, 1213 composed of component codewords encoded by adjusting a code rate of the staircase code by maintaining a number of information bits the same in each layer of the staircase code and varying only a number of parity bits, as in the example of FIG. 11 when an LDPC code is used as a component code. In FIG. 12, areas where bits corresponding to "nonzero entry" in the parity-check matrix are present are illustrated with the same shading for convenience of description.

[Embodiment 4: variable $\alpha_i$, fixed $r_i$]

Embodiment 4 is a case where a number $\alpha_i$ of new information bits may be varied and a number $r_i$ of parity bits is fixed, opposite to Embodiments 2 and 3 above. As in Embodiment 1, a total number of information bits $K_{tot}$ to be transmitted

by a transmitting device and a total code rate $R_{tot}$ may be determined through the configuration information (control information) of Table 1 above. Embodiment 4 may decrease a number $\alpha_i$ of new information bits of component codewords of a layer to which protection is applied by adjusting the code rate from a predetermined value $\alpha = K - M$, and compensate a code rate loss generated here from other layers.

As described in the embodiments of FIGS. 6 to 12 above, by adjusting a code rate for each layer of the staircase code, decoding capability of specific layers vulnerable to error occurrence in the staircase code or affecting decoding capability of an adjacent layer due to error propagation may be enhanced, and overall decoding capability may be enhanced. Accordingly, enhancement in error rate performance may be expected in the staircase code, and if characteristics of component codes are appropriately utilized well, consistency in the communication system may be maintained, performance enhancement may be expected without additional complexity, and signaling information (control information) for the code rate control method may also be efficiently transmitted and received.

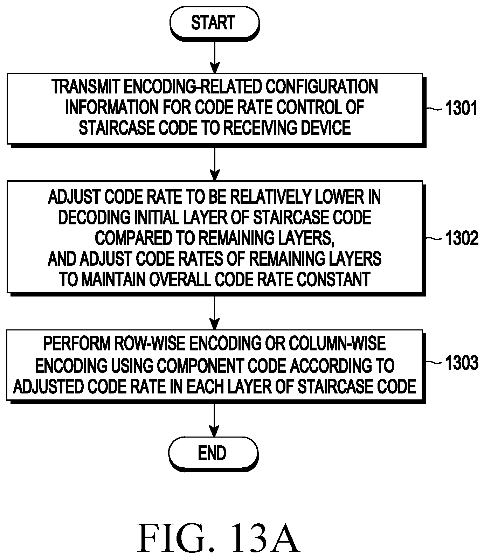

FIG. 13A is a view illustrating an encoding method including code rate control in a staircase code performed by a transmitting device of a wireless communication system according to an embodiment of the disclosure. The encoding method for code rate control may be performed using at least one of the embodiments of FIGS. 6 to 12. The staircase code of FIG. 13A may be applied to both a square matrix-based staircase code and a non-square matrix-based staircase code.

Referring to FIG. 13A, in step 1301, the transmitting device may transmit encoding-related configuration information (control information) (e.g., "CodeRateForStairs") including code rate control of the staircase code described in the embodiments of FIGS. 6 to 12 to the receiving device. The configuration information (control information) may include control information indicating the code rate control method. Further, the configuration information (control information) may include at least one of the parameters in Table 1, or information indicating/representing the at least one parameter, or information corresponding to the at least one parameter. When the transmitting device and the receiving device store or know in advance the encoding-related parameters of the staircase code, step 1301 may be omitted. Further, the encoding-related configuration information (control information) may be transmitted as at least one combination of RRC information, DCI, and MAC-CE.

In step 1302, the transmitting device may adjust a code rate to be relatively lower in at least one layer among all layers of the staircase code (e.g., the at least one layer may include a decoding initial layer) compared to remaining layers except for the at least one layer, and adjust code rates of the remaining layers to maintain an overall code rate constant. Further, the transmitting device may adjust a code rate of the staircase code according to a method indicated among Embodiments 1 to 4 described in Method 1 to Method 4 above based on the encoding-related configuration information (control information) including the code rate control.

In step 1303, the transmitting device may perform row-wise encoding or column-wise encoding using a component code according to an adjusted code rate in each layer of the staircase code, add generated parity bits to the corresponding layer to generate a component codeword, and transmit a staircase code codeword composed of generated multiple component codewords to the receiving device.

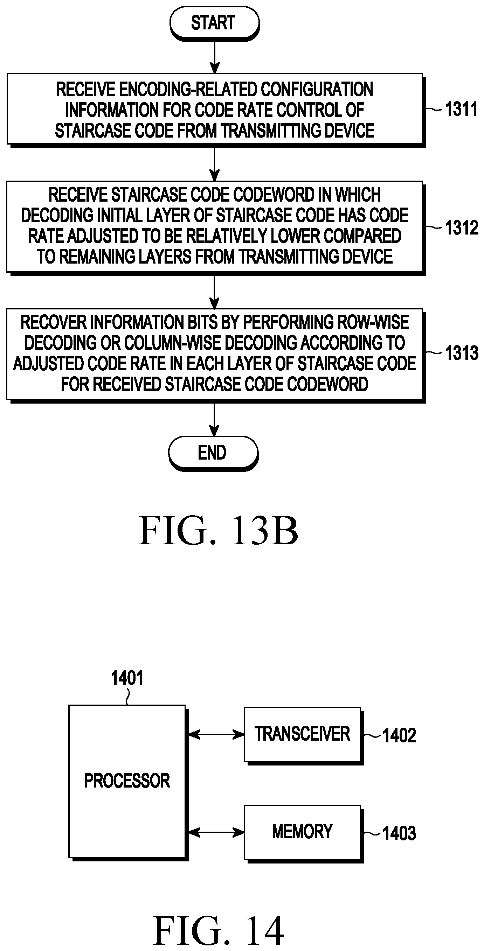

FIG. 13B is a view illustrating a decoding method including code rate control in a staircase code performed by a receiving device of a wireless communication system according to an embodiment of the disclosure. The decoding method for code rate control may be performed using at least one of the embodiments of FIGS. 6 to 12. The staircase code of FIG. 13B may be applied to both a square matrix-based staircase code and a non-square matrix-based staircase code.

Referring to FIG. 13B, in step 1311, the receiving device may receive encoding-related configuration information for code rate control of the staircase code from the transmitting device. The configuration information (control information) may include control information indicating the code rate control method. Further, the configuration information (control information) may include at least one of the parameters in Table 1, or information indicating/representing the at least one parameter, or information corresponding to the at least one parameter. When the transmitting device and the receiving device store or know in advance the encoding-related parameters of the staircase code, step 1311 may be omitted. Further, the encoding-related configuration information (control information) may be transmitted as at least one combination of RRC information, DCI, and MAC-CE.

In step 1312, the receiving device may receive, from the transmitting device, a staircase code codeword in which a decoding initial layer of the staircase code has a code rate adjusted to be relatively lower compared to remaining layers. In this case, a code rate of the staircase code codeword may be adjusted according to a method indicated among Embodiments 1 to 4 described in Method 1 to Method 4 above based on the encoding-related configuration information (control information) including the code rate control.

In step 1313, the receiving device may recover information bits by performing row-wise decoding or column-wise decoding according to an adjusted code rate in each layer of the staircase code for the received staircase code codeword.

FIG. 14 is a view illustrating an example configuration of a communication device in a wireless communication system according to an embodiment of the disclosure. The communication device may be a transmitting device performing the encoding method including code rate control of the staircase code described above or a receiving device performing the decoding method including code rate control of the staircase code described above. Further, the communication device of FIG. 14 may be one of a base station and a terminal.

The communication device of FIG. 14 may include a processor 1401, a transceiver 1403, and memory 1405. The processor 1401, the transceiver 1403, and the memory 1405 of the communication device may operate according to the encoding/decoding method including code rate control of the staircase code described in the embodiments of FIGS. 6 to 13B. However, components of the communication device are not limited to the examples described above. For example, the communication device may include more components or fewer components than the components described above. Further, the processor 1401, the transceiver 1403, and the memory 1405 may also be implemented in the form of a single chip.

The transceiver 1403 is a collective term for a receiver and a transmitter of the communication device and may transmit/receive a signal with a counterpart communication device. In this case, a signal transmitted and received may include at least one of control information and data. Further, the transceiver 1403 may receive a signal and output the signal to the processor 1401, and may transmit a signal output from the processor 1401. Further, the transceiver 1403 of FIG. 14 may include an RF transmitter that up-converts and amplifies a frequency of a signal to be transmitted, and an RF receiver that low-noise amplifies a received signal and down-converts a frequency. Further, the transceiver 1403 may receive a signal and output it to the processor 1401, and may transmit a signal output from the processor 1401 to a counterpart communication device through a network. The memory 1405 may store a program and data necessary for performing the encoding/decoding method including code rate control of the staircase code described in the embodiments of FIGS. 6 to 13B. The memory 1405 may store control information or data included in a signal obtained at the communication device. The memory 1405 may be composed of a storage medium such as ROM, RAM, hard disk, CD-ROM, DVD, or a combination of storage media. Further, the processor 1401 may control a series of processes so that the communication device may operate according to at least one of the embodiments of FIGS. 1A to 13B. The processor 1401 may include at least one processor.

The methods according to the embodiments descried in the specification or claims of the disclosure may be implemented in hardware, software, or a combination of hardware and software. When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included. The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

**Claims**

1. A method of encoding a staircase code performed by a transmitting device in a wireless communication system, the method comprising:

   adjusting a code rate to be relatively lower in at least one layer among all layers of the staircase code compared to remaining layers except for the at least one layer, and adjusting code rates of the remaining layers to maintain an overall code rate of the staircase code constant;
   alternately performing row-wise encoding or column-wise encoding using a component code according to the adjusted code rate in each layer of the staircase code; and
   transmitting a staircase code codeword generated by performing the row-wise encoding or the column-wise encoding to a receiving device.

2. The method of claim 1, wherein the at least one layer includes a decoding initial layer where decoding starts in the receiving device, and the decoding initial layer is one of a first layer and a last layer of the staircase code.

3. The method of claim 1, further comprising:

transmitting encoding-related control information for code rate control of the staircase code to the receiving device, wherein the encoding-related control information includes first bit information indicating whether a number ($\alpha_i$) of new information bits and a number ($r_i$) of parity bits in each layer of the staircase code are fixed or variable, and the first bit information indicates one of following Method 1 through Method 4 for code rate control in each layer (i),
Method 1: fixed $\alpha_i = \alpha$, fixed $r_i = r$
Method 2: fixed $\alpha_i = \alpha$, variable $r_i$
Method 3: variable $\alpha_i$, fixed $r_i = r$
Method 4: variable $\alpha_i$, variable $r_i$
the encoding-related control information further includes second bit information indicating one of following four options for code rate control in each layer of the staircase code, and the second bit information is applied in case that the first bit information indicates the Method 2,
Option 1: decreasing a code rate of a first layer in the staircase code, maintaining a code rate of a last layer, and increasing code rates of middle layers,
Option 2: decreasing code rates of D front layers among k layers in the staircase code and increasing code rates of remaining rear (k-D) layers,
Option 3: decreasing a code rate of the last layer in the staircase code, maintaining a code rate of the first layer, and increasing code rates of the middle layers,
Option 4: decreasing code rates of D rear layers among the k layers in the staircase code and increasing code rates of remaining front (k-D) layers.

4. The method of claim 1, further comprising:
transmitting encoding-related control information for code rate control of the staircase code to the receiving device, wherein the encoding-related control information includes first bit information indicating whether a number ($\alpha_i$) of new information bits and a number ($r_i$) of parity bits in each layer of the staircase code are fixed or variable, and wherein the encoding-related control information further includes second bit information indicating one of a plurality of options related to code rate increase or decrease for code rate control in each layer of the staircase code.

5. The method of claim 3, wherein, in case that a low density parity check (LDPC) code is used as the component code, the code rate is adjusted by fixing a number of information bits and adjusting a number of parity bits in each layer of the staircase code.

6. The method of claim 3, wherein the encoding-related control information is transmitted to the receiving device using at least one combination of radio resource control (RRC) information, downlink control information (DCI), and medium access control-control element (MAC-CE).

7. A transmitting device performing encoding of a staircase code in a wireless communication system, the transmitting device comprising:

a transceiver; and
a processor configured to: adjust a code rate to be relatively lower in at least one layer among all layers of the staircase code compared to remaining layers except for the at least one layer, and adjust code rates of the remaining layers to maintain an overall code rate of the staircase code constant,
alternately perform row-wise encoding or column-wise encoding using a component code according to the adjusted code rate in each layer of the staircase code, and
transmit, through the transceiver, a staircase code codeword generated by performing the row-wise encoding or the column-wise encoding to a receiving device.

8. The transmitting device of claim 7, adapted to operate according to the method of any one of claims 2 through 6.

9. A method of decoding a staircase code performed by a receiving device in a wireless communication system, the method comprising:

receiving, from a transmitting device, a staircase code codeword in which a code rate is adjusted to be relatively lower in at least one layer among all layers of the staircase code compared to remaining layers except for the at least one layer; and
recovering information bits by performing row-wise decoding or column-wise decoding using a component code according to the adjusted code rate in each layer of the staircase code for the received staircase code codeword.

10. The method of claim 9, wherein the at least one layer includes a decoding initial layer where decoding starts in the receiving device, and the decoding initial layer is one of a first layer and a last layer of the staircase code.

11. The method of claim 9, further comprising

receiving, from the transmitting device, encoding-related control information for code rate control of the staircase code, wherein the encoding-related control information includes first bit information indicating whether a number ($\alpha_i$) of new information bits and a number ($r_i$) of parity bits in each layer of the staircase code are fixed or variable, and the first bit information indicates one of following Method 1 through Method 4 for code rate control in each layer (i),
Method 1: fixed $\alpha_i = \alpha$, fixed $r_i = r$
Method 2: fixed $\alpha_i = \alpha$, variable $r_i$
Method 3: variable $\alpha_i$, fixed $r_i = r$
Method 4: variable $\alpha_i$, variable $r_i$
the encoding-related control information further includes second bit information indicating one of following four options for code rate control in each layer of the staircase code, and the second bit information is applied in case that the first bit information indicates the Method 2,
Option 1: decreasing a code rate of a first layer in the staircase code, maintaining a code rate of a last layer, and increasing code rates of middle layers,
Option 2: decreasing code rates of D front layers among k layers in the staircase code and increasing code rates of remaining rear (k-D) layers,
Option 3: decreasing a code rate of the last layer in the staircase code, maintaining a code rate of the first layer, and increasing code rates of the middle layers,
Option 4: decreasing code rates of D rear layers among the k layers in the staircase code and increasing code rates of remaining front (k-D) layers.

12. The method of claim 9, further comprising
receiving, from the transmitting device, encoding-related control information for code rate control of the staircase code, wherein the encoding-related control information includes first bit information indicating whether a number ($\alpha_i$) of new information bits and a number ($r_i$) of parity bits in each layer of the staircase code are fixed or variable, and wherein the encoding-related control information further includes second bit information indicating one of a plurality of options related to code rate increase or decrease for code rate control in each layer of the staircase code.

13. A receiving device performing decoding of a staircase code in a wireless communication system, the receiving device comprising:

a transceiver; and
a processor configured to: receive, from a transmitting device through the transceiver, a staircase code codeword in which a code rate is adjusted to be relatively lower in at least one layer among all layers of the staircase code compared to remaining layers except for the at least one layer, and
recover information bits by performing row-wise decoding or column-wise decoding using a component code according to the adjusted code rate in each layer of the staircase code for the received staircase code codeword.

14. The receiving device of claim 13, adapted to operate according to the method of any one of claims 10 through 12.

FIG. 1A

FIG. 1B

FIG. 2A

All zero or information
bits can be inserted

210

Encoding with the component code C row-by-row

211~ $B_0$

(a)

New information          Parity

M          N-M

212a          21    213a

211~ $B_0$

(b)

M          N-M

212b

21          213b

☐ Zero bits

▨ New information bits

⊠ Parity bits

M

# FIG. 2B

220

Part of B₁

31

210

B₀  B₁

M

M

N-M

201

New information

B₂

222

N-M

223

Parity

M

r

M

M

M

M

Zero bits

New information bits

Parity bits

FIG. 3

EP 4 783 493 A2

405. Row-wise decoding

404. Column-wise decoding

403. Row-wise decoding

402. Column-wise decoding

$X_0$

$X_1$  ...

...

$X_2$

$X_3$  ...

...

$X_4$

$X_5$

...

401. Row-wise decoding

(b)

Applying decoding strategy of component code to each row and column

ex) LDPC BP decoding, polar SCL decoding

Actually received part

$X_0 = 0$

$X_1$

$X_2$

$X_3$

$X_4$

$X_5$

(a)

FIG. 4

FIG. 5

EP 4 783 493 A2

FIG. 6

FIG. 7

EP 4 783 493 A2

**FIG. 8**

EP 4 783 493 A2

EP 4 783 493 A2

$$\begin{cases} \alpha_i = K - M = \alpha \\ r_i = r \qquad\qquad \text{for } i = 1,2,\dots,k \\ N_i = N = M + \alpha + r \end{cases}$$

**$B_1$**

910 ~ | $B_0$ | $M \times \alpha$ information bits | $M \times r$ parity bits | ~ 901

$M + \alpha + r = N$

**$B_2$**

920 ~ | $B'_1$ | $M \times \alpha$ information bits | $M \times r$ parity bits | ~ 902

$M + \alpha + r = N$

**$B_3$**

930 ~ | $B'_2$ | $M \times \alpha$ information bits | $M \times r$ parity bits | ~ 903

$M + \alpha + r = N$

(a)

901

$B_0$ | $B_1$

$N$

$B_2$

$N$

902

$B_3$

$N$

(b)

FIG. 9

$$\begin{cases} \alpha_i = K - M = \alpha \\ N_i = N = M + \alpha + r \end{cases} \text{ for } i = 1, 2, \ldots, k$$

$\rightarrow$ values of $r_i$ are varied

(a)

$B_1$

1010 — $B_0$ | $M \times \alpha$ information bits | $M \times r_1$ parity bits — 1001

$M + \alpha + r_1 = N_1$

$B_2$

1020 — $B'_1$ | $M \times \alpha$ information bits | $M \times r_2$ parity bits — 1002

$M + \alpha + r_2 = N_2$

$B_3$

1030 — $B'_2$ | $M \times \alpha$ information bits | $M \times r_3$ parity bits — 1003

$M + \alpha + r_3 = N_3$

(b)

$N_1$ — 1001

$B_0$ | $B_1$

$N_2$

$B_2$

1002 — $B_3$

$N_3$

EP 4 783 493 A2

FIG. 10

Data length-K □□□□□□□□□□□□□□□□□□□□□□□□□ & code rate R ⇒ code length N = K / R

⬇ PCM is degined by truncating predefined base matrix (protomatrix)

K          N

If there are some changes for R (N), just need to adjust the size of the PCM

▨ Nonzero entry

FIG. 11

EP 4 783 493 A2

for B$_{i+2}$    for B$_{i+1}$    for B$_i$

1211

B$_i$

| B'$_{i-1}$ | M x α$_i$ information bits | M x r$_i$ parity bits |

B$_{i+1}$

| B'$_i$ | M x α$_{i+1}$ information bits | M x r$_{i+1}$ parity bits |

~ 1212

B$_{i+2}$

| B'$_{i+1}$ | M x α$_{i+2}$ information bits | M x r$_{i+2}$ parity bits |

~ 1213

· α$_i$ = K for i = 1,2, ... , k, and kMK = K$_{tot}$

· r$_i$ ≥ r$_{i+1}$ for i = 1,2, ... , k

· Total sum condition has to be satisfied

▨ Nonzero entry

# FIG. 12

START

TRANSMIT ENCODING-RELATED CONFIGURATION
INFORMATION FOR CODE RATE CONTROL OF
STAIRCASE CODE TO RECEIVING DEVICE — 1301

ADJUST CODE RATE TO BE RELATIVELY LOWER IN
DECODING INITIAL LAYER OF STAIRCASE CODE
COMPARED TO REMAINING LAYERS,
AND ADJUST CODE RATES OF REMAINING LAYERS
TO MAINTAIN OVERALL CODE RATE CONSTANT — 1302

PERFORM ROW-WISE ENCODING OR COLUMN-WISE
ENCODING USING COMPONENT CODE ACCORDING TO
ADJUSTED CODE RATE IN EACH LAYER OF STAIRCASE CODE — 1303

END

FIG. 13A

START

RECEIVE ENCODING-RELATED CONFIGURATION INFORMATION FOR CODE RATE CONTROL OF STAIRCASE CODE FROM TRANSMITTING DEVICE ~1311

RECEIVE STAIRCASE CODE CODEWORD IN WHICH DECODING INITIAL LAYER OF STAIRCASE CODE HAS CODE RATE ADJUSTED TO BE RELATIVELY LOWER COMPARED TO REMAINING LAYERS FROM TRANSMITTING DEVICE ~1312

RECOVER INFORMATION BITS BY PERFORMING ROW-WISE DECODING OR COLUMN-WISE DECODING ACCORDING TO ADJUSTED CODE RATE IN EACH LAYER OF STAIRCASE CODE FOR RECEIVED STAIRCASE CODE CODEWORD ~1313

END

FIG. 13B

1401

PROCESSOR

TRANSCEIVER ~1402

MEMORY ~1403

FIG. 14